# EUROPÄISCHE PATENTSCHRIFT

(11) **EP 3 017 901 B1**
(45) Veröffentlichungstag und Bekanntmachung des Hinweises auf die Patenterteilung: **30.01.2019**
(21) Anmeldenummer: 15192498.2
(22) Anmeldetag: 02.11.2015
(51) Int. Cl.: B23K 9/12, B23K 9/29

(54) **WIG-SCHWEISSBRENNER MIT KREISBOGENFÖRMIGER FÜHRUNG**
TIG WELDING TORCH WITH ARC-SHAPED GUIDE
CHALUMEAU DE SOUDURE PAR GAZ INERTE DE TUNGSTENE AVEC UN GUIDAGE EN FORME D'ARC

(30) Priorität: 04.11.2014 AT 508032014
(43) Veröffentlichungstag der Anmeldung: 11.05.2016
(73) Patentinhaber: Fronius International GmbH, 4643 Pettenbach (AT)
(72) Erfinder: HUBINGER, Manfred, 4550 Kremsmünster (AT); LEEB, Josef, 4643 Pettenbach (AT); PÜHRINGER, Stefan, 4655 Vorchdorf (AT)
(74) Vertreter: Sonn & Partner Patentanwälte

(56) Entgegenhaltungen:
- EP-A1- 2 322 306
- US-A1- 2007 017 912

## Beschreibung

Die Erfindung betrifft einen WIG-Schweißbrenner mit einem Brennerkopf mit zumindest einer nichtabschmelzenden Elektrode und zumindest einer Zuführeinrichtung für einen abschmelzenden drahtförmigen Zusatzwerkstoff, wobei die Längsachse jeder Elektrode und die Längsachse jedes drahtförmigen Zusatzwerkstoffs einander in einem Tool Center Point (TCP) schneiden, und der Brennerkopf verstellbar auf einer Halterung angeordnet ist und in zumindest zwei verschiedenen Positionen bei gleichbleibendem Tool Center Point (TCP) fixierbar ist.

WIG (Wolfram-Inertgas)-Schweißbrenner beinhalten zumindest eine, bevorzugt zwei, nichtabschmelzende temperaturbeständige Wolfram-Elektroden zur Bildung eines zwischen den Elektroden und dem zu bearbeitenden Werkstück brennenden Lichtbogens. Der Werkstoff zum Ausfüllen eines Spalts zwischen zwei Werkstücken oder zum Auftragen auf die Oberfläche des Werkstücks beim sog. Auftragsschweißen wird über einen drahtförmigen Zusatzwerkstoff zugeführt, der in den Lichtbogen eingebracht wird, wo eine Erwärmung und Verflüssigung des Zusatzwerkstoffs stattfindet. Bei der Zuführung verschiedener Werkstoffe können auch mehrere drahtförmige Zusatzwerkstoffe dem Schweißbrenner zugeführt werden. Um die zumindest eine nichtabschmelzende Elektrode ist der Brennerkopf mit der Brennerdüse angeordnet, in den auch das üblicherweise beim Schweißen verwendete Schutzgas (Argon, Helium oder dergl.) zugeführt wird, wodurch die Zündeigenschaften sowie die Stabilität des Lichtbogens optimiert werden können. Die für das Zünden des Lichtbogens erforderliche Stromzuführung erfolgt über entsprechende Kabeln zum Brennerkopf bzw. die Elektroden. Der zumindest eine drahtförmige Zusatzwerkstoff schneidet den Lichtbogen im sog. Tool Center Point (TCP). Bei der Verwendung verschiedener Brennerköpfe oder Rohrbögen wird darauf geachtet, dass dieser Tool Center Point immer gleich bleibt, sodass eine Verstellung der Zuführeinrichtungen für den abschmelzenden drahtförmigen Zusatzwerkstoff bei einem Wechsel des Brennerkopfes bzw. Rohrbogens nicht notwendig ist.

Die EP 2 322 306 A1 offenbart eine Schweißvorrichtung, mit einem Schweißkopf, der eine Halterung aufweist, an welcher zwei Brenner angeordnet sind. Die beiden Brenner weisen jeweils eine Stromdüse auf, wobei durch die Stromdüse des ersten Brenners der Hauptdraht und durch die Stromdüse des zweiten Brenners der Zusatzdraht an die Oberfläche des zu schweißenden Bauteils geführt wird. Der Hauptdraht und der Zusatzdraht weisen eine unterschiedliche Polarität auf, wobei der Zusatzdraht mit dem Bauteil leitend verbunden ist. Dadurch kommt es zu einem geringeren Energieeintrag bzw. Einbrand in das Bauteil, womit der Verlust an Legierungselementen verringert wird. Die Brenner können jeweils in einem Winkel gegenüber einem Lot auf das Bauteil an der Halterung positioniert werden.

Die US 2007/0017912 A1, die als nächstliegender Stand der Technik angesehen wird, beschreibt eine Schweißbrennervorrichtung mit einem Schweißbrenner und einem Fülldrahtjustierungsmodul, welche auf einer Montageplatte angeordnet sind. Die Montageplatte hat einen kreisbogenförmigen Abschnitt, welcher einen ebenfalls kreisbogenförmigen Schlitz aufweist. Der Schweißbrenner und das Fülldrahtjustierungsmodul sind auf dem Abschnitt derart angeordnet, dass der Abstand respektive der Winkel zwischen dem Schweißbrenner und dem Fülldrahtjustierungsmodul verändert werden kann.

Beispielsweise beschreibt die US 7,329,827 B2 einen WIG-Schweißbrenner der gegenständlichen Art, der in den Abmessungen relativ groß ist, sodass ein Schweißen, insbesondere Auftragsschweißen, nicht aller Werkstückgeometrien möglich ist. Beispielsweise eignet sich ein solcher Schweißbrenner nicht zum Auftragsschweißen im Inneren von Rohren, wie es beispielsweise beim sog. Cladding beispielsweise bei Kesselrohren oder Pipelines durchgeführt wird. Ein solches Cladding-Verfahren wird beispielsweise zum Schutz vor Korrosion und Abrasion durchgeführt, indem bestimmte widerstandsfähigere Materialien auf die innere Oberfläche derartiger Rohre aufgetragen wird.

Die CN 102825368 A beschreibt einen WIG-Schweißbrenner der gegenständlichen Art mit einem verstellbaren Brennerkopf. Die Konstruktion ist relativ aufwändig und groß, weshalb sie sich nicht für ein Schweißen aller Werkstückgeometrien, insbesondere für ein Auftragsschweißen im Inneren von Rohren, eignet.

Die Aufgabe der vorliegenden Erfindung besteht in der Schaffung eines oben genannten WIG-Schweißbrenners, der möglichst geringe Baugröße aufweist und darüber hinaus eine optimale Anwendung bei unterschiedlich geformten Werkstücken zulässt. Nachteile bekannter WIG-Schweißbrenner sollen vermieden oder zumindest reduziert werden.

Gelöst wird diese Aufgabe dadurch, dass die Halterung länglich und am vorderen Ende quasi V-förmig ausgebildet ist und am vorderen Ende eine kreisbogenförmige Führung aufweist, in welcher Führung ein mit dem Brennerkopf verbundener Schlitten anordenbar ist, sodass die Außenabmessungen des Schweißbrenners bei einer Verstellung des Brennerkopfs nicht wesentlich verändert werden, wobei an der Halterung eine Einrichtung zur Befestigung der zumindest einen Zuführeinrichtung für den drahtförmigen Zusatzwerkstoff angeordnet ist, wobei die Zuführeinrichtung an der gegenüberliegenden Seite der Halterung angeordnet ist, sodass der Brennerkopf zwischen der Halterung und der Zuführeinrichtung angeordnet ist, und sich der Tool Center Point (TCP) seitlich von der Längsachse der Halterung befindet.Durch die Verstellbarkeit des Brennerkopfs in zumindest zwei, vorzugsweise mehr, Positionen kann eine einfache Anpassung des WIG-Schweißbrenners an die jeweiligen Gegebenheiten, beispielsweise beim Auftragsschweißen im Inneren eines Rohres, vorgenommen werden, ohne dass der WIG-Schweißbrenner oder dessen Brennerkopf ausgetauscht werden muss. Die Verstellbarkeit des Brennerkopfs auf der Halterung des WIG-Schweißbrenners gewährleistet einen gleichbleibenden Tool Center Point, wodurch die zumindest eine Zuführeinrichtung für den abschmelzenden drahtförmigen Zusatzwerkstoff bei einer Veränderung der Position des Brennerkopfs nicht verstellt werden muss. Somit kann die Umrüstung des WIG-Schweißbrenners bzw. die Verstellung des Brennerkopfs sehr rasch und einfach durchgeführt werden, ohne dass der Schweißprozess lange unterbrochen werden muss. Die Halterung für den Brennerkopf ist durch eine kreisbogenförmige Führung gebildet, in welcher Führung ein mit dem Brennerkopf verbundener Schlitten anordenbar ist. Eine derartige Konstruktion der Halterung ermöglicht eine sehr einfache Verstellbarkeit des Brennerkopfs, indem dieser an einem entsprechend gestalteten Schlitten befestigt und der Schlitten in der kreisbogenförmigen Führung in der gewünschten Position angeordnet wird. Der Schlitten kann an die Form des jeweiligen Brennerkopfs angepasst werden. Beim erfindungsgemäßen WIG-Schweißbrenner befindet sich der Tool Center Point seitlich von der Längsachse des Schweißbrenners bzw. der länglich ausgebildeten quasi V-förmigen Halterung. Der Tool Center Point (TCP) befindet sich dabei auf der Verlängerung der Mittelachse (Symmetrieachse) des Brennerkopfs, wobei die Mittelachse die Längsachse des Schweißbrenners seitlich der Halterung schneidet. Die Mittelachse des Brennerkopfs ist dementsprechend in der Ebene, die Längsachse und Mittelachse aufspannen, gemäß dem Winkel α verstellbar. Damit befindet sich der Tool Center Point (TCP) beim erfindungsgemäßen Schweißbrenner außerhalb der Längsachse bzw. Längsausdehnung des Schweißbrenners bzw. der Halterung. Durch diese platzsparende Konstruktion ergeben sich gegenüber herkömmlichen Konstruktionen derartiger Schweißbrenner besondere Vorteile, die ein Schweißen auch komplexerer Werkstückgeometrien, insbesondere ein Auftragsschweißen im Inneren von Rohren, wie Kesselrohren oder Pipelines, in optimaler Weise erlauben. Dadurch, dass an der Halterung eine Einrichtung zur Befestigung der zumindest einen Zuführeinrichtung für den drahtförmigen Zusatzwerkstoff angeordnet ist, und die Zuführeinrichtung an der gegenüberliegenden Seite der Halterung angeordnet ist, sodass der Brennerkopf im Wesentlichen zwischen der Halterung und der zumindest einen Zuführeinrichtung für den drahtförmigen Zusatzwerkstoff angeordnet ist, kann eine optimale Einhaltung des Tool Center Points (TCP) erzielt werden. Die Befestigungseinrichtung für die zumindest eine Zuführeinrichtung für den drahtförmigen Zusatzwerkstoff ist an einer entsprechenden Stelle der Halterung des WIG-Schweißbrenners angeordnet, sodass die Verstellbarkeit des Brennerkopfes nicht behindert wird. Beispielsweise kann die Befestigungseinrichtung auf einem entsprechend gestalteten Bügel der Halterung angeordnet werden.

Vorzugsweise ist der Brennerkopf stufenlos auf der Halterung verstellbar angeordnet. Bei einer stufenlosen Verstellbarkeit des Brennerkopfs auf der Halterung kann ein optimaler Winkel des Brennerkopfs in Bezug auf den zumindest einen drahtförmigen Zusatzwerkstoff und das zu bearbeitende Werkstück geschaffen werden. Beispielsweise können mit einem derartigen WIG-Schweißbrenner durch entsprechende Veränderung der Position des Brennerkopfs sowohl horizontale als auch vertikale Schweißvorgänge durchgeführt werden.

Die kreisbogenförmige Führung schließt einen Winkelbereich von 45° bis 120°, vorzugsweise 90°, ein. Durch einen derartigen Winkelbereich können die meisten Positionen des Brennerkopfs zum Werkstück und somit die meisten Schweißverfahren bzw. Schweißpositionen in optimaler Weise realisiert werden.

Vorteilhafter Weise sind Fixierelemente zum Fixieren des Schlittens in der Führung in der jeweiligen gewünschten Position vorgesehen. Derartige Fixierelemente können beispielsweise durch Klemmschrauben oder dergl. sehr einfach und kostengünstig hergestellt werden.

Die Befestigungseinrichtung ist vorzugsweise verstellbar an der Halterung angeordnet, sodass der Tool Center Point (TCP) eingestellt bzw. nachjustiert werden kann. Die Verstellbarkeit kann beispielsweise mit in Langlöchern angeordneten Schrauben einfach und kostengünstig realisiert werden.

Gemäß einem weiteren Merkmal der Erfindung ist die Befestigungseinrichtung durch einen Quader gebildet, in welchem die Zuführeinrichtung für den drahtförmigen Zusatzwerkstoff anordenbar ist. Dies stellt eine einfache und kostengünstige Realisierung der Befestigungseinrichtung dar. Natürlich kann die Halterung mit der Befestigungseinrichtung für die zumindest eine Zuführeinrichtung für den drahtförmigen Zusatzwerkstoff auch einstückig hergestellt sein.

Die zumindest eine Zuführeinrichtung für den drahtförmigen Zusatzwerkstoff kann durch eine Rohr aus verformbarem Material, beispielsweise Kupfer, gebildet sein. Dies stellt eine einfache und flexible Realisierungsvariante dar.

Die Halterung für den Brennerkopf ist üblicherweise mit einem Brennerkörper verbunden, der wiederum mit dem üblichen Schlauchpaket verbunden wird, das die notwendigen Kabel und Leitungen von der Schweißstromquelle zum Schweißbrenner bzw. Brennerkopf enthält. Der Brennerkörper wird üblicherweise an entsprechenden automatisierten Anlagen, wie zum Beispiel einer Drehvorrichtung, befestigt, sodass eine endlose Drehung des WIG-Schweißbrenners ermöglicht wird. Der Brennerkörper kann auch an einem Manipulator eines Schweißroboters befestigt werden.

Die erfindungsgemäße Ausführungsform des WIG-Schweißbrenners ist durch eine platzsparende Konstruktion gekennzeichnet, welche insbesondere das Auftragsschweißen im Inneren hohler Werkstücke, beispielsweise Rohren, erleichtert bzw. ermöglicht. Die Verstellung des Brennerkopfs erfolgt dabei vorzugsweise so, dass die Außenabmessungen des Schweißbrenners beim Verstellen des Brennerkopfs nicht wesentlich verändert werden. Vorzugsweise werden die Außenabmessungen des WIG-Schweißbrenners durch den Durchmesser des Brennerkopfs festgelegt.

Die Erfindung wird anhand der beigefügten Zeichnungen, welche ein Ausführungsbeispiel zeigen, näher erläutert. Darin zeigen
- Fig. 1: eine perspektivische Ansicht auf eine Ausführungsform eines WIG-Schweißbrenners;
- Fig. 2: eine Seitenansicht auf den WIG-Schweißbrenner gemäß Fig. 1 bei einer ersten Position des Brennerkopfs; und
- Fig. 3: eine Seitenansicht auf den WIG-Schweißbrenner gemäß Fig. 2 mit verstelltem Brennerkopf.

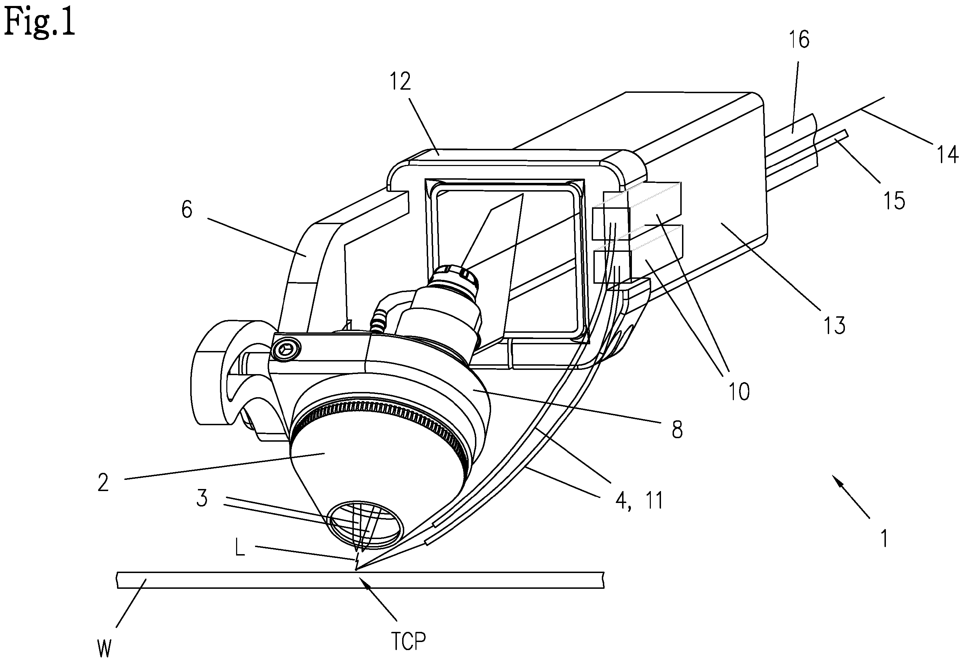

Fig. 1 zeigt eine perspektivische Ansicht auf eine Ausführungsform eines WIG-Schweißbrenners 1. Der WIG-Schweißbrenner 1 beinhaltet einen Brennerkopf 2, in dem zumindest eine, bevorzugt zwei, nichtabschmelzende Elektroden 3, vorzugsweise aus Wolfram, angeordnet sind. Die nichtabschmelzenden Elektroden 3 werden mit entsprechenden Kabeln 14 mit der Schweißstromquelle (nicht dargestellt) verbunden, um die Elektroden 3 mit entsprechendem Strom versorgen zu können. Über eine Gaszuleitung 15 wird das üblicherweise verwendete Schutzgas (Argon, Helium oder dergl.) an die Schweißstelle befördert. Zwischen der zumindest einen nichtabschmelzenden Elektrode 3 und dem zu bearbeitenden Werkstück W wird der Lichtbogen L gezündet, der zumindest einen über eine Zuführeinrichtung 4 zugeführten drahtförmigen Zusatzwerkstoff 5 in einem Tool Center Point (TCP) zum Schmelzen bringt, sodass dieser geschmolzene Zusatzwerkstoff 5 beispielsweise beim Auftragsschweißen auf die Oberfläche des Werkstücks W aufgetragen wird. Die Längsachse jeder Elektrode 3 und die Längsachse jedes drahtförmigen Zusatzwerkstoffs 5 schneiden einander in diesem Tool Center Point (TCP). Erfindungsgemäß ist nun vorgesehen, dass der Brennerkopf 2 des WIG-Schweißbrenners 1 verstellbar auf einer Halterung 6 angeordnet ist und in zumindest zwei verschiedenen Positionen, vorzugsweise mehreren Positionen, allenfalls stufenlos, bei gleichbleibendem Tool Center Point (TCP) fixierbar ist. Ebenso kann bei der Verstellung des Brennerkopfs 2 die Position der Spitzen der Elektroden 3 gleich bleiben bzw. die Lage des Mittelpunkts zwischen den Spitzen mehrerer Elektroden 3. Am Ende der Halterung 6 kann ein Kanal angeordnet sein, der im Brennerkörper 13 verläuft und dann in das mit dem Brennerkörper 13 verbundene Schlauchpaket 16 übergeht. Im Schlauchpaket 16 können weiters Kühlleitungen zur Führung eines Kühlfluids zur Kühlung des WIG-Schweißbrenners 1 enthalten sein.

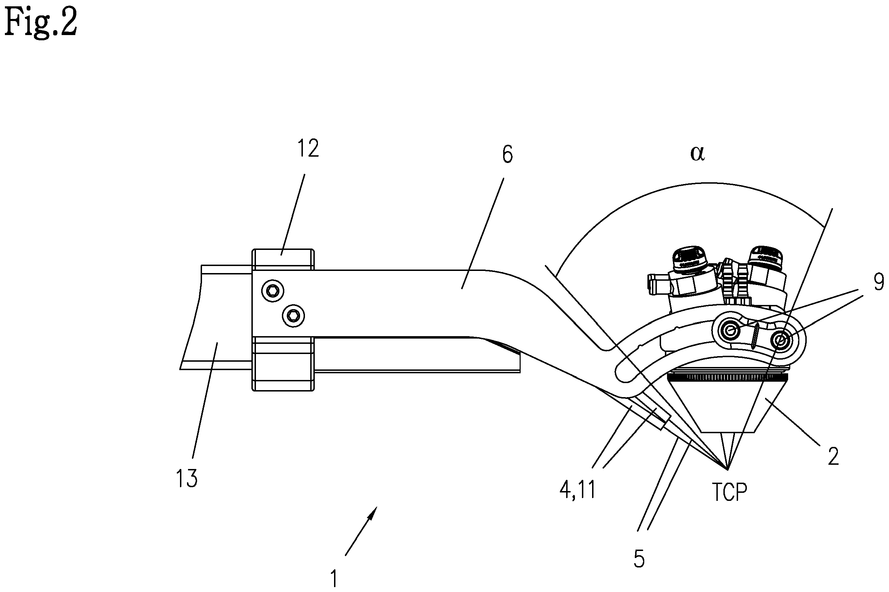

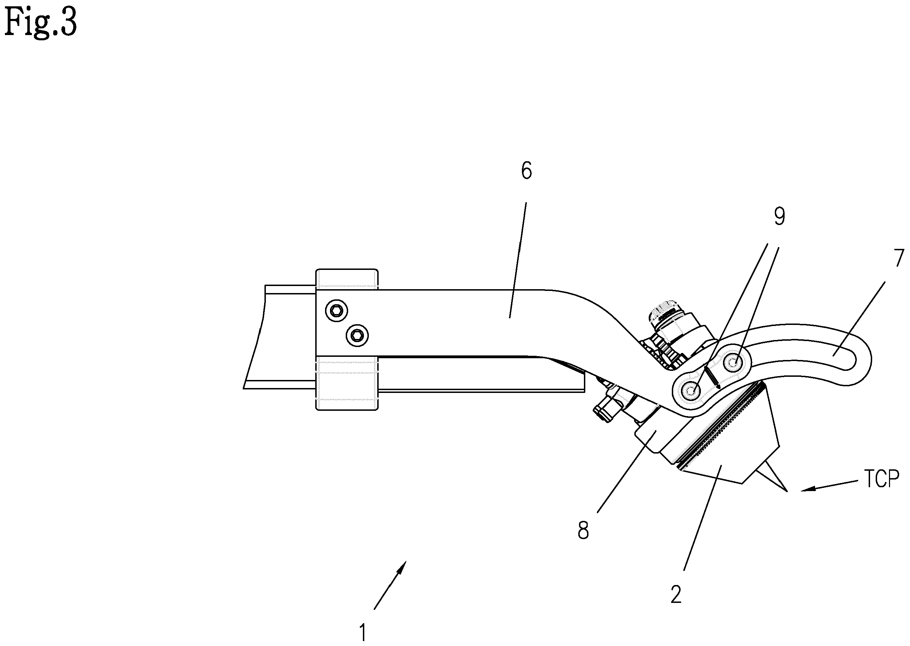

In Zusammenschau mit den Fig. 2 und 3 besteht eine Ausführungsform des WIG-Schweißbrenners 1 aus einer länglichen quasi V-förmigen Halterung 6, die am vorderen Ende eine kreisbogenförmige Führung 7 enthält, in der ein mit dem Brennerkopf 2 verbundener Schlitten 8 anordenbar ist, sodass eine Verstellbarkeit des Brennerkopfs 2 in einem Winkelbereich α von etwa 60° bei gleichbleibendem Tool Center Point (TCP) möglich ist. Bei entsprechender Gestaltung der Führung 7 kann auch ein größeren Winkelbreich α erzielt werden. Die zumindest eine Zuführeinrichtung 4 für den drahtförmigen Zusatzwerkstoff 5 ist an der gegenüberliegenden Seite der Halterung 6 angeordnet, sodass der Brennerkopf 2 ungehindert in seiner Position verstellt werden kann, ohne die Zuführeinrichtung 4 und somit den Tool Center Point (TCP) verändern zu müssen. Die Fixierung des Brennerkopfs 2 in der gewünschten Position erfolgt vorzugsweise über Fixierelemente 9, wie z.B. Schrauben. Während der Verstellung des Brennerkopfs 2 bleibt der TCP immer erhalten, wodurch die Veränderung einfach und rasch durchgeführt werden kann und der TCP nicht neu eingestellt werden muss. Die Zuführeinrichtung 4 für den drahtförmigen Zusatzwerkstoff 5 kann durch ein Rohr 11 aus verformbarem Material, beispielsweise Kupfer, gebildet sein. Somit kann der drahtförmige Zusatzwerkstoff 5 in optimaler Weise und möglichst reibungsarm zum TCP gefördert werden. An der Halterung 6 bzw. am Brennerkörper 13 ist eine Einrichtung 12 zur Befestigung der zumindest einen Zuführeinrichtung 4 für den drahtförmigen Zusatzwerkstoff 5 angeordnet. Diese Einrichtung 12 zur Befestigung der Zuführeinrichtung 4 kann beispielsweise einen Quader 10 beinhalten, in dem die Zuführeinrichtung 4 in Form eines Rohres 11 angeordnet wird. Wenn der Quader 10 verschwenkbar in der profilförmigen Befestigungseinrichtung 12 angeordnet ist, kann eine optimale reibungsarme Förderung des drahtförmigen Zusatzwerkstoffs 5 in der Zuführeinrichtung 4 gewährleistet werden.

Der WIG-Schweißbrenner 1 ermöglicht somit eine einfache und rasche Positionsänderung des Brennerkopfs 2 für verschiedene Schweißverfahren und/oder Schweißpositionen, insbesondere im Inneren von Rohren beim Auftragsschweißen. Eine Veränderung der Position des WIG-Schweißbrenners 1 ist insbesondere dann relevant, wenn sich der Innendurchmesser eines rohrförmigen Werkstücks beispielsweise konisch verjüngt oder stufenweise reduziert.

Der WIG-Schweißbrenner 1 zeichnet sich durch einen sehr kompakten und platzsparenden Aufbau aus und lässt aufgrund der Verstellbarkeit des Brennerkopfs 2 sowohl ein horizontales als auch vertikales Schweißen ohne Änderung des WIG-Schweißbrenners 1 zu, indem lediglich die Position des Brennerkopfs 2 verändert wird.

## Patentansprüche

1. WIG-Schweißbrenner (1) mit einem Brennerkopf (2) mit zumindest einer nichtabschmelzenden Elektrode (3) und zumindest einer Zuführeinrichtung (4) für einen abschmelzenden drahtförmigen Zusatzwerkstoff (5), wobei die Längsachse jeder Elektrode (3) und die Längsachse jedes drahtförmigen Zusatzwerkstoffs (5) einander in einem Tool Center Point (TCP) schneiden, und der Brennerkopf (2) verstellbar auf einer Halterung (6) angeordnet ist und in zumindest zwei verschiedenen Positionen bei gleichbleibendem Tool Center Point (TCP) fixierbar ist, wobei die Halterung (6) länglich und am vorderen Ende quasi V-förmig ausgebildet ist, und am vorderen Ende eine kreisbogenförmige Führung (7) aufweist, in welcher Führung (7) ein mit dem Brennerkopf (2) verbundener Schlitten (8) anordenbar ist, sodass die Außenabmessungen des Schweißbrenners (1) bei einer Verstellung des Brennerkopfs (2) nicht wesentlich verändert werden, wobei an der Halterung (6) eine Einrichtung (12) zur Befestigung der zumindest einen Zuführeinrichtung (4) für den drahtförmigen Zusatzwerkstoff (5) angeordnet ist, wobei die Zuführeinrichtung (4) an der gegenüberliegenden Seite der Halterung (6) angeordnet ist, sodass der Brennerkopf (2) zwischen der Halterung (6) und der Zuführeinrichtung (4) angeordnet ist, und sich der Tool Center Point (TCP) seitlich von der Längsachse der Halterung (6) befindet,.

2. WIG-Schweißbrenner (1) nach Anspruch 1, **dadurch gekennzeichnet, dass** der Brennerkopf (2) stufenlos auf der Halterung (6) verstellbar angeordnet ist.

3. WIG-Schweißbrenner (1) nach Anspruch 1 oder 2, **dadurch gekennzeichnet, dass** die kreisbogenförmige Führung (7) einen Winkelbereich (α) von 45° bis 120°, vorzugsweise 90° einschließt.

4. WIG-Schweißbrenner (1) nach einem der Ansprüche 1 bis 3, **dadurch gekennzeichnet, dass** Fixierelemente (9) zum Fixieren des Schlittens (8) in der Führung (7) vorgesehen sind.

5. WIG-Schweißbrenner (1) nach einem der Ansprüche 1 bis 4, **dadurch gekennzeichnet, dass** die Befestigungseinrichtung (12) verstellbar an der Halterung (6) angeordnet ist.

6. WIG-Schweißbrenner (1) nach nach einem der Ansprüche 1 bis 5, **dadurch gekennzeichnet, dass** die Befestigungseinrichtung (12) durch einen Quader (10) gebildet ist, in welchem die Zuführeinrichtung (4) für den drahtförmigen Zusatzwerkstoff (5) anordenbar ist.

7. WIG-Schweißbrenner (1) nach einem der Ansprüche 1 bis 6, **dadurch gekennzeichnet, dass** die zumindest eine Zuführeinrichtung (4) für den drahtförmigen Zusatzwerkstoff (5) durch eine Rohr (11) aus verformbarem Material, beispielsweise Kupfer, gebildet ist.

8. WIG-Schweißbrenner (1) nach einem der Ansprüche 1 bis 7, **dadurch gekennzeichnet, dass** die Halterung (6) für den Brennerkopf (2) mit einem Brennerkörper (13) verbunden ist.

## Claims

1. TIG welding torch (1) comprising a torch tip (2) that has at least one non-melting electrode (3) and at least one feeder device (4) for a melting wire-shaped filler material (5), wherein the longitudinal axis of each electrode (3) and the longitudinal axis of each wire-shaped filler material (5) intersect one another at a Tool Centre Point (TCP), and the torch tip (2) is arranged adjustably on a support (6) and can be fixed in at least two different positions while the Tool Centre Point (TCP) remains the same, wherein the support (6) is designed so as to be elongate and virtually V-shaped at the front end and comprises an arcuate guide (7) at the front end, in which guide (7) a slide (8) connected to the torch tip (2) is arranged, such that the outer dimensions of the welding torch (1) are not changed substantially when the torch tip (2) is adjusted, wherein a device (12) for securing the at least one feeder device (4) for the wire-shaped filler material (5) is arranged on the support (6), wherein the feeder device (4) is arranged on the side opposite the support (6) such that the torch tip (2) is arranged between the support (6) and the feeder device (4) and the Tool Centre Point (TCP) is located to the side of the longitudinal axis of the support (6).

2. TIG welding torch (1) according to claim 1, **characterised in that** the torch tip (2) is arranged so as to be continuously adjustable on the support (6).

3. TIG welding torch (1) according to either claim 1 or claim 2, **characterised in that** the arcuate guide (7) encompasses an angular range (α) of from 45° to 120°, preferably 90°.

4. TIG welding torch (1) according to any of claims 1 to 3, **characterised in that** fixing elements (9) are provided for fixing the slide (8) in the guide (7).

5. TIG welding torch (1) according to any of claims 1 to 4, **characterised in that** the securing device (12) is arranged adjustably on the support (6).

6. TIG welding torch (1) according to any of claims 1 to 5, **characterised in that** the securing device (12) is formed by a cuboid (10) in which the feeder device (4) for the wire-shaped filler material (5) can be arranged.

7. TIG welding torch (1) according to any of claims 1 to 6, **characterised in that** the at least one feeder device (4) for the wire-shaped filler material (5) is formed by a tube (11) made of malleable material, for example copper.

8. TIG welding torch (1) according to any of claims 1 to 7, **characterised in that** the support (6) for the torch tip (2) is connected to a torch body (13).

## Revendications

1. Chalumeau de soudure WIG (1) avec une tête de chalumeau (2) avec au moins une électrode non fusible (3) et au moins un dispositif d'alimentation (4) pour un matériau d'apport fusible en forme de fil (5), l'axe longitudinal de chaque électrode (3) et l'axe longitudinal de chaque matériau d'apport en forme de fil (5) se coupant au niveau d'un point d'outil (Tool Center Point, TCP) et la tête de chalumeau (2) étant disposée de manière réglable sur un support (6) et pouvant être fixée dans au moins deux positions différentes, le point d'outil (TCP) restant invariable, le support (6) étant allongé et présentant, à l'extrémité avant, quasiment la forme d'un V et comprenant, à l'extrémité avant, un guidage (7) en forme d'arc de cercle et, dans ce guidage (7), un chariot (8) relié avec la tête de chalumeau (2) pouvant être disposé de façon à ce que les dimensions extérieures du chalumeau de soudure (1) ne soient globalement pas modifiées lors d'un réglage de la tête de chalumeau (2), un dispositif (12) pour la fixation de l'au moins un dispositif d'alimentation (4) pour le matériau d'apport en forme de fil (5) étant disposé sur le support (6), le dispositif d'alimentation (4) étant disposé sur le côté opposé du support (6) de façon à ce que la tête de chalumeau (2) soit disposée entre le support (6) et le dispositif d'alimentation (4) et à ce que le point d'outil (TCP) soit disposé latéralement par rapport à l'axe longitudinal du support (6).

2. Chalumeau de soudure WIG (1) selon la revendication 1, **caractérisé en ce que** la tête de chalumeau (2) est disposée de manière réglable progressivement sur le support (6).

3. Chalumeau de soudure WIG (1) selon la revendication 1 ou la revendication 2, **caractérisé en ce que** le guidage (7) en forme d'arc de cercle englobe une zone angulaire (α) de 45° à 120°, de préférence de 90°.

4. Chalumeau de soudure WIG (1) selon l'une des revendications 1 à 3, **caractérisé en ce que** des éléments de fixation (9) sont prévus pour la fixation du chariot (8) dans le guidage (7).

5. Chalumeau de soudure WIG (1) selon l'une des revendications 1 à 4, **caractérisé en ce que** le dispositif de fixation (12) est disposé de manière réglable sur le support (6).

6. Chalumeau de soudure WIG (1) selon l'une des revendications 1 à 5, **caractérisé en ce que** le dispositif de fixation (12) est constitué d'un parallélépipède (10) dans lequel le dispositif d'alimentation (4) pour le matériau d'apport en forme de fil (5) peut être disposé.

7. Chalumeau de soudure WIG (1) selon l'une des revendications 1 à 6, **caractérisé en ce que** l'au moins un dispositif d'alimentation (4) pour le matériau d'apport en forme de fil (5) est constitué d'un tube (11) en matériau déformable, par exemple du cuivre.

8. Chalumeau de soudure WIG (1) selon l'une des revendications 1 à 7, **caractérisé en ce que** le support (6) pour la tête de chalumeau (2) est relié avec un corps de chalumeau (13).
